# EUROPÄISCHE PATENTSCHRIFT

(11) **EP 2 176 308 B1**
(45) Veröffentlichungstag und Bekanntmachung des Hinweises auf die Patenterteilung: **06.06.2012**
(21) Anmeldenummer: 08786445.0
(22) Anmeldetag: 25.07.2008
(51) Int. Cl.: C08F 220/06, C08F 220/10, C08F 220/18, C09D 7/00

(54) **WÄSSRIGE DISPERSIONEN, IHRE HERSTELLUNG UND IHRE VERWENDUNG**
AQUEOUS DISPERSIONS, THE PRODUCTION THEREOF, AND USE THEREOF
DISPERSIONS AQUEUSES, LEUR FABRICATION ET LEUR UTILISATION

(30) Priorität: 03.08.2007 EP 07113807; 11.01.2008 EP 08150202; 11.01.2008 DE 102008004177
(43) Veröffentlichungstag der Anmeldung: 21.04.2010
(73) Patentinhaber: BASF SE, 67056 Ludwigshafen (DE)
(72) Erfinder: NÖRENBERG, Ralf, 67063 Ludwigshafen (DE); SIEMENSMEYER, Karl, 67227 Frankenthal (DE); SCHMIDT, Kati, 67063 Ludwigshafen (DE); LEYRER, Reinhold J, 67125 Dannstadt-schauernheim (DE); SENF, Andreas, 67310 Hettenleidelheim (DE)
(86) Internationale Anmeldenummer: PCT/EP2008/059784
(87) Internationale Veröffentlichungsnummer: WO 2009/019148

(56) Entgegenhaltungen:
- EP-A- 1 026 202

## Beschreibung

Die vorliegende Erfindung betrifft eine wässrige Dispersion, enthaltend
(A) ein Copolymer, das einpolymerisiert enthält
   (a) wenigstens eine ethylenisch ungesättigte Carbonsäure oder ihr Anhydrid,
   (b) wenigstens ein nichtionisches ethylenisch ungesättigtes Tensidmonomer der allgemeinen Formel I oder II

      R¹-O-(CH₂-CHR²-O)ₙ-CO-C(R³)=CH₂ I

      R¹-O-(CH₂-CHR²-O)ₙ-O-(CH₂)ₘCH=CH₂ II

      worin R¹ für im Wesentlichen unverzweigtes C₆-C₃₀-Alkyl steht,
      R² jeweils gleich oder verschieden ist und für Wasserstoff oder Methyl steht,
      R³ für Wasserstoff oder Methyl steht und
      n für eine ganze Zahl im Bereich von 2 bis 100 steht,
      m gewählt wird aus null oder 1,
   (c) wenigstens ein C₁-C₂-Alkylmethacrylat,
   (d) wenigstens ein C₂-C₄-Alkylacrylat,
      und
(B) ein Farbmittel.

Weiterhin betrifft die vorliegende Erfindung ein Verfahren zur Herstellung von erfindungsgemäßen wässrigen Dispersionen. Weiterhin betrifft die vorliegende Erfindung die Verwendung von erfindungsgemäßen wässrigen Dispersionen.

Um in Pigment-haltigen Dispersionen die Viskosität einzustellen, verwendet man vielfach Verdicker (Verdickungsmittel). Bei Verdickern kann es sich um natürliche oder synthetische Verdicker handeln. Bekannte natürliche Verdicker sind Agar-Agar, Carrageen, Gummi arabicum, Alginate wie beispielsweise Natriumalginat, weiterhin Pektine, Polyosen, Johannisbrotbaum-Kernmehl (Carubin) und Dextrine. Bekannte synthetische Verdicker sind in vielen Fällen mit Ammoniak neutralisierte Copolymere von Acrylsäure mit Acryllamid, die geringe Mengen eines zweifach ethylenisch ungesättigten Comonomers wie beispielsweise Methylenbisacrylamid einpolymerisiert enthalten. Derartige synthetische Verdicker enthalten häufig Weißöl.

Die Eigenschaften von den bekannten Verdickern lassen sich noch verbessern. Das Weißöl ist vielfach während der Synthese des Verdickers erforderlich.

Unerwünscht ist in vielen Fällen das Weißöl, welches sich in synthetischen Verdickern befindet und das in Anwendungen auf faserigen Materialien wie beispielsweise Textil zurückbleiben und dort zu verschlechterten Echtheiten und zu einem verschlechterten Griff führen kann. Insbesondere dann, wenn man Druckpasten auf Basis von Dispersfarbstoffen (Dispersionsfarbstoffen) oder Reaktivfarbstoffen einsetzen möchte, ist es erwünscht, den Verdicker durch einfaches Waschen zu entfernen, was bei der Verwendung von Weißöl-haltigen Verdickern in vielen Fällen nicht gelingt.

Man hat auch versucht, das Weißöl nach der Synthese des Verdickers zu entfernen, beispielsweise durch Trocknung des Verdickers, insbesondere durch Sprühtrocknung. Man erhält dann so genannte Pulververdicker, die sich aber nicht stets in andere Formulierungen gut einrühren lassen.

Man hat versucht, die Nachteile des Weißöls durch die Verwendung von Assoziativerdickern zu umgehen. Assoziativverdicker sind wasserlösliche Polymere und haben tensidartige hydrophobe Bestandteile, welche in der Lage sind, sich in einem hydrophilen, insbesondere wässrigen Medium sowohl mit sich selbst als auch mit anderen hydrophoben Stoffen in Wechselwirkung zu treten, insbesondere zu assoziieren und ein Netzwerk zu bilden. Durch das resultierende assoziative Netzwerk wird das Medium verdickt oder geliert.

Bekannte Assoziativverdicker lassen sich jedoch noch verbessern.

EP-A 0 013 836 offenbart Emulsionscopolymere, die (i) 20 bis 69,5 Gew.-% (Meth)acrylsäure, (ii) 0,5 bis 25 Gew.-% eines Monomers der Formel CH₂=C(R)-C(O)-O-(CH₂CH₂O)ₙ-R⁰, worin R für H oder CH₃ steht, n wenigstens 2 ist und R⁰ für C₈-C₃₀-Alkyl steht, und (iii) wenigstens 30 Gew.-% eines C₁-C₄-Alkyl(meth)acrylats enthalten. Nach Neutralisation mit Alkali dienen die Copolymere als Verdicker für Anstrichmittel, Waschmittel und dergleichen.

WO 99/65958 beschreibt alkalilösliche Verdicker, die das Umsetzungsprodukt einer ungesättigten Carbonsäure, eines monoethylenisch ungesättigten Monomers und eines hydrophoben, alkoxylierten Macromonomers umfassen. Das monoethylenisch ungesättigte Monomer umfasst eine Methylgruppe; vorzugsweise handelt es sich um Methylacrylat. Diese Polymere sollen bereits bei einem pH-Wert von 4,5 bis 6,0 löslich werden und sich daher für kosmetische Erzeugnisse eignen.

WO 2006/016035 betrifft die Verwendung eines wasserlöslichen Acrylpolymers als Verdickungsmittel in pigmentierten wässrigen Zubereitungen. Das Acrylpolymer besteht aus einem ethylenisch ungesättigten Monomer mit Carboxylfunktion, einem ethylenisch ungesättigten nichtionischen Monomer und einem ethylenisch ungesättigten oxyalkylierten Monomer, das mit einer hydrophoben nicht-aromatischen verzweigten Kette mit 10 bis 24 Kohlenstoffatomen terminiert ist.

Der vorliegenden Erfindung liegt daher die Aufgabe zugrunde, Verdicker zur Verfügung zu stellen, deren Lösungen bzw. Formulierungen in Gegenwart oder Abwesenheit von Tensiden hoch transparent sind und die eine hohe Verdickungswirkung bei gleichzeitiger hoher Scherverdünnung aufweisen. Weiterhin bestand die Aufgabe, solche Verdicker zur Verfügung zu stellen, die sich leicht und rückstandsfrei wieder auswaschen lassen.

Dementsprechend wurden die eingangs definierten wässrigen Dispersionen gefunden, die im Folgenden auch erfindungsgemäße wässrige Dispersionen genannt werden. Erfindungsgemäße wässrige Dispersionen enthalten
(A) mindestens ein Copolymer, im Rahmen der vorliegenden Erfindung auch Copolymer (A) genannt, das einpolymerisiert enthält:
   (a) wenigstens eine ethylenisch ungesättigte Carbonsäure oder ihr Anhydrid,
   (b) wenigstens ein nichtionisches ethylenisch ungesättigtes Tensidmonomer der allgemeinen Formel I oder II

      R¹-O-(CH₂-CHR²-O)ₙ-CO-C(R³)=CH₂ I

      R¹-O-(CH₂-CHR²-O)ₙ-O-(CH₂)ₘCH=CH₂ II

      worin R¹ für im Wesentlichen unverzweigtes C₆-C₃₀-Alkyl steht,
      R² jeweils gleich oder verschieden ist und für Wasserstoff oder Methyl steht,
      R³ für Wasserstoff oder Methyl steht und
      n für eine ganze Zahl im Bereich von 2 bis 100 steht,
      m gewählt wird aus null oder 1,
   (c) wenigstens ein C₁-C₂-Alkylmethacrylat und
   (d) wenigstens ein C₂-C₄-Alkylacrylat.

Bevorzugt enthält Copolymer (A) n-Butylacrylat als Comonomer (d) einpolymerisiert, insbesondere im Bereich von 5 bis 85 Gew.-% n-Butylacrylat.

Der erfindungsgemäße Assoziativverdicker zeichnet sich durch eine ausgeprägte hydrotrope Wirkung aus, d. h. er verbessert die Löslichkeit von Stoffen, die in Wasser nur schwer löslich sind. Er ist elektrolytstabil und zeigt auch in Formulierungen mit hoher Ionenstärke keine Ausflockungen bzw. Sedimentation.

In einer Ausführungsform der vorliegenden Erfindung kann Copolymer (A) außerdem (e) ein mehrfach ethylenisch ungesättigtes Comonomer einpolymerisiert enthalten. Beispiele für mehrfach ethylenisch ungesättigte Comonomere sind Isopren, 1,3-Butadien Allyl(meth)acrylat, Divinylbenzol, insbesondere 1,3-Dinvinylbenzol, α,ω-C₂-C₆-Alkylendi(meth)acrylate, insbesondere 1,4-Butandioldi-(meth)acrylat, und Chloropren.

In einer Ausführungsform der vorliegenden Erfindung kann Copolymer (A) außerdem (f) ein polares Comonomer einpolymerisiert enthalten.

Beispiele für polare Comonomere (f) sind Vinylpropionat und insbesondere Vinylacetat, weiterhin (Meth)acrylamid und (Meth)acrylnitril.

In einer anderen Ausführungsform der vorliegenden Erfindung enthält Copolymer (A) über die Comonomere (a), (b), (c) und (d) keine weiteren Comonomere einpolymerisiert.

Copolymer (A) ist in der Regel Weißöl-frei.

In einer Ausführungsform der vorliegenden Erfindung enthält Copolymer (A) einpolymerisiert:
10 bis 75 Gew.-%, vorzugsweise 20 bis 50 Gew.-% ethylenisch ungesättigte Carbonsäure (a),
0,1 bis 50 Gew.-%, vorzugsweise 1 bis 10 Gew.-% nichtionisches ethylenisch ungesättigtes Tensidmonomer (b),
0,5 bis 50 Gew.-%, vorzugsweise 5 bis 40 Gew.-% C₁-C₂-Alkylmethacrylat (c),
5 bis 85 Gew.-%, vorzugsweise 15 bis 70 Gew.-% C₂-C₄-Alkylacrylat (d),
0 bis 9 Gew.-% mehrfach ethylenisch ungesättigtes Comonomer (e) und
0 bis 30 Gew.-%, bevorzugt 0,1 bis 20 Gew.-% polares Comonomer (f).

Bei ethylenisch ungesättigter Carbonsäure (a) handelt es sich vorzugsweise um eine monoethylenisch ungesättigte Monocarbonsäure mit 3 bis 8 Kohlenstoffatomen oder um eine monoethylenisch ungesättigte Dicarbonsäure mit 4 bis 8 Kohlenstoffatomen bzw. um die betreffenden Anhydride. Geeignete ethylenisch ungesättigte Carbonsäuren (a) sind z. B. ausgewählt unter Acrylsäure, Methacrylsäure, Itaconsäure und Maleinsäure, als Anhydride sind insbesondere Maleinsäureanhydrid und Itaconsäureanhydrid zu nennen. Besonders bevorzugt ist Methacrylsäure.

Nichtionisches ethylenisch ungesättigtes Tensidmonomer (b) weist die allgemeine Formel I oder II auf

R¹-O-(CH₂-CHR²-O)ₙ-CO-C(R³)=CH₂ I

R¹-O-(CH₂-CHR²-O)ₙ-O-(CH₂)ₘCH=CH₂ II

worin R¹ für im Wesentlichen unverzweigtes C₆-C₃₀-Alkyl, vorzugsweise unverzweigtes C₈-C₂₂-Alkyl steht,
R² jeweils gleich oder verschieden ist und für Wasserstoff oder Methyl steht, vorzugsweise jeweils gleich und für Wasserstoff,
R³ für Wasserstoff oder Methyl steht, vorzugsweise für Methyl, und
n für eine ganze Zahl im Bereich von 2 bis 100, vorzugsweise 3 bis 50, steht, und m steht für null oder eins.

Dabei bedeutet "im Wesentlichen unverzweigtes C₆-C₃₀-Alkyl", dass R¹ eine primäre C₆-C₃₀-Alkylgruppe ist, die keine oder maximal eine Verzweigung aufweist, vorzugsweise eine Verzweigung in 2-Stellung zur Hydroxygruppe des korrespondierenden Alkohols R¹-OH.

Die n-fach eingebauten Wiederholungseinheiten leiten sich von Ethylenoxid oder Propylenoxid ab. Die Bedeutung von R² ist in jeder Wiederholungseinheit unabhängig von anderen Wiederholungseinheiten. Unterschiedliche Alkylenoxideinheiten können blockweise angeordnet oder statistisch verteilt vorliegen.

Geeignete C₁-C₂-Alkylmethacrylate (c) sind Methylmethacrylat und Ethylmethacrylat, wovon Methylmethacrylat besonders bevorzugt ist.

Geeignete C₂-C₄-Alkylacrylate (d) sind Ethylacrylat, n-Propylacrylat, iso-Propylacrylat, n-Butylacrylat, iso-Butylacrylat, sec.-Butylacrylat und tert.-Butylacrylat sowie Mischungen der vorstehend genannten, bevorzugt sind Ethylacrylat, n-Propylacrylat und insbesondere n-Butylacrylat.

Vorzugsweise umfasst das C₂-C₄-Alkylacrylat zumindest n-Butylacrylat, insbesondere ein Gemisch von n-Butylacrylat mit Ethylacrylat. Vorzugsweise enthält Copolymer (A) im Bereich von 5 bis 85 Gew.-%, bezogen auf das Gesamtgewicht des Copolymers (A), n-Butylacrylat einpolymerisiert, wobei ein Bereich von über 10 Gew.-% bis 60 Gew.-% bevorzugt und ein Bereich von 15 Gew.-% bis 45 Gew.-% besonders bevorzugt ist.

Geeignete mehrfach ethylenisch ungesättigte Monomere (e) sind z. B. Ethylenglycoldi(meth)acrylat, 1,4-Butandioldi(meth)acrylat, 1,6-Hexandioldi(meth)acrylat, Divinylbenzol, insbesondere 1,3-Diviniylbenzol, weiterhin Dihydrocylcopentadienyl(meth)-acrylat, Dipropylenglykoldi(meth)acrylat, Diethylenglykoldi(meth)acrylat.

Copolymer (A) kann abgrenzbare Domänen aufweisen, beispielsweise Schalen mit unterschiedlicher Zusammensetzung, wie sie durch Stufenpolymerisation unterschiedlicher Monomergemische unterschiedlicher Zusammensetzung erhalten werden können.

Copolymer (A) ist vorzugsweise ein einstufiges Copolymer. Der Ausdruck "einstufiges Copolymer" bedeutet, dass es im Wesentlichen eine einheitliche Zusammensetzung über das einzelne Polymerpartikel aufweist. D. h. es weist keine abgrenzbaren Domänen, z. B. Schalen, mit unterschiedlicher Zusammensetzung auf, wie sie durch Stufenpolymerisation von Monomergemischen unterschiedlicher Zusammensetzung erhalten werden können.

Erfindungsgemäße wässrige Dispersion enthält weiterhin ein Farbmittel (B), das gewählt wird aus Pigmenten, Dispersionsfarbstoffen (auch Dispersfarbstoffen genannt), Säurefarbstoffen, Metallkomplexfarbstoffen, Küpenfarbstoffen und Reaktivfarbstoffen, wobei Dispersionsfarbstoffe und Reaktivfarbstoffe bevorzugt sind. Dabei können im Zusammenhang mit der vorliegenden Erfindung auch weiße oder schwarze Pigmente, weiße oder schwarze Reaktivfarbstoffe oder weiße oder schwarze Dispersionsfarbstoffe als Farbmittel (B) bezeichnet werden.

Unter Pigmenten sind im Rahmen der vorliegenden Erfindung praktisch nicht lösliche, dispergierte feinteilige, organische oder anorganische Farbmittel gemäß der Definition in DIN 55944 zu verstehen. Bevorzugt wählt man organisches Pigment und/oder Metallpigment aus.

Beispiele für anorganische Pigmente sind
Weißpigmente wie Zinkweiß, Zinksulfid, Lithopone, Bleiweiß, Bleisulfat, Kreide (Calciumcarbonat), Titandioxid;
Gelbpigmente wie Eisenoxidgelb, Cadmiumgelb, Nickeltitangelb, Chromtitangelb, Chromgelb, Bleichromat, Bismutvanadat, Neapelgelb oder Zinkgelb,
blaue anorganische Pigmente wie Ultramarinblau, Kobaltblau, Manganblau, Eisenblau, grüne anorganische Pigmente wie Ultramaringrün, Kobaltgrün, Chromoxid (Chromoxidgrün);
violette anorganische Pigmente wie Ultramarinviolett, Kobaltviolett, Manganviolett; rote anorganische Pigmente wie Ultramarinrot, Molybdatrot, Chromrot, Cadmiumrot; braune anorganische Pigmente wie Eisenoxidbraun, Chromeisenbraun, Zinkeisenbraun, Mangantitanbraun;
Schwarzpigmente wie Eisenoxidschwarz, Eisen-Mangan-Schwarz, Spinellschwarz, Ruß; orangefarbene Spinelle und Korunde, Cadmiumorange, Chromorange, Bleimolybdat; Aluminium oder Cu/Zn-Legierung.

Beispiele für bevorzugte anorganische Pigmente sind Titandioxid, Calciumcarbonat und Ruß.

Beispielhaft ausgewählte organische Pigmente sind
Monoazopigmente: C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 112, 146, 170, 184, 210, 245 und 251; C.I. Pigment Yellow 1, 3, 73, 74, 65, 97, 151 und 183;
Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
Anthanthronpigmente: C.I. Pigment Red 168 (C.I. Vat Orange 3);
Anthrachinonpigmente:C.I. Pigment Yellow 147 und 177; C.I. Pigment Violet 31; Anthrapyrimidinpigmente: C.I. Pigment Yellow 108 (C.I. Vat Yellow 20); Chinacridonpigmente: C.I. Pigment Red 122, 202 und 206; C.I. Pigment Violet 19; Chinophthalonpigmente: C.I. Pigment Yellow 138;
Dioxazinpigmente: C.I. Pigment Violet 23 und 37;
Flavanthronpigmente: C.I. Pigment Yellow 24 (C.I. Vat Yellow 1); Indanthronpigmente: C.I. Pigment Blue 60 (C.I. Vat Blue 4) und 64 (C.I. Vat Blue 6); Isoindolinpigmente: C.I. Pigment Orange 69; C.I. Pigment Red 260; C.I. Pigment Yellow 139 und 185;
Isoindolinonpigmente: C.I. Pigment Orange 61; C.I. Pigment Red 257 und 260; C.I. Pigment Yellow 109, 110, 173 und 185;
Isoviolanthronpigmente: C.I. Pigment Violet 31 (C.I. Vat Violet 1); Metallkomplexpigmente: C.I. Pigment Yellow 117, 150 und 153; C.I. Pigment Green 8; Perinonpigmente: C.I. Pigment Orange 43 (C.I. Vat Orange 7); C.I. Pigment Red 194 (C.I. Vat Red 15);
Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29; Phthalocyaninpigmente: C.I. Pigment Blue 15, 15:1, 15:2, 15:3, 15:4, 15:6 und 16; C.I. Pigment Green 7 und 36;
Pyranthronpigmente: C.I. Pigment Orange 51; C.I. Pigment Red 216 (C.I. Vat Orange 4);
Thioindigopigmente: C.I. Pigment Red 88 und 181 (C.I. Vat Red 1); C.I. Pigment Violet 38 (C.I. Vat Violet 3);
Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz);
C.I. Pigment Yellow 101 (Aldazingelb);
C.I. Pigment Brown 22.

Beispiele für besonders bevorzugte Pigmente sind: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Weitere geeignete Pigmente sind metallische Pigmente wie beispielsweise Goldbronze, Silberbronze, Iriodinpigmente, Glitter.

Der mittlere Durchmesser von im erfindungsgemäßen Verfahren eingesetztem Pigment liegt üblicherweise im Bereich von 20 nm bis 1,5 µm, bevorzugt im Bereich von 150 bis 300 nm.

In einer Ausführungsform der vorliegenden Erfindung liegt im erfindungsgemäßen Verfahren eingesetztes Pigment in sphärischer oder annährend sphärischer partikulärer Form vor, d.h. das Verhältnis längster Durchmesser zu kleinster Durchmesser liegt im Bereich von 1,0 bis 2,0, bevorzugt bis 1,5.

Pigment fügt man erfindungsgemäßen wässrigen Dispersionen vorzugsweise in Form von Pigmentzubereitungen zu. Pigmentzubereitungen enthalten üblicherweise 20 bis 60 Gew.-% Pigment, weiterhin Wasser und eine oder mehrere oberflächenaktive Verbindungen, beispielsweise einen oder mehrere Emulgatoren, beispielhaft seien mehrfach alkoxylierte C₁₀-C₃₀-Alkanole genannt.

Als Dispersionsfarbstoffe, zu denen im Rahmen der vorliegenden Erfindung auch die Küpenfarbstoffe gezählt werden sind beispielsweise geeignet:
C.I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109,110,111,112,113,114,115,116,117,118,119,120,121,179,180,181,182, 183, 184, 184:1, 198, 200, 201, 202, 203, 204, 205, 206, 207, 208, 209, 210, 211, 212, 213, 214, 215, 216, 217, 218, 219, 220, 221, 222, 223, 224, 225, 226, 227 und 228;
C.I. Disperse Orange 1, 2, 3, 3:3, 4, 5, 6, 7, 8, 9, 10, 11, 12, 13, 14, 15, 16, 17, 18, 19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147 und 148;
C.I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86:1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 224, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328, 329, 330, 331, 332, 333, 334, 335, 336, 338, 339, 340, 341, 342, 343, 344, 346, 347, 348, 349, 352, 356 und 367;
C.I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 70, 81, 86, 87, 88, 89, 91, 92, 93, 94, 96 und 97;
C.I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349, 351 und 359;
C.I. Disperse Green 1, 2, 5, 6 und 9;
C.I . Disperse Brown 1, 2, 3, 4, 4:1, 5, 7, 8, 9, 10, 11, 18, 19, 20 und 21;
C.I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34 und 36.

Beispiele für Küpenfarbstoffe sind:
C.I. Vat Yellow 2, 3, 4, 5, 9, 10, 12, 22, 26, 33, 37, 46, 48, 49 und 50,
C.I. Vat Orange 1, 2, 5, 9, 11, 13, 15, 19, 26, 29, 30 und 31,
C.I. Vat Red 2, 10, 12, 13, 14, 16, 19, 21, 31, 32, 37, 41, 51, 52 und 61,
C.I. Vat Violet 2, 9, 13, 14, 15, 17 und 21,
C.I. Vat Blue 1, 3, 4, 5, 10, 12, 13, 14, 16, 17, 18, 19, 20, 22, 25, 26, 29, 30, 31, 35, 41, 42, 43, 64, 65, 66, 72 und 74,
C.I. Vat Green 1, 2, 3, 5, 7, 8, 9, 13, 14, 17, 26, 29, 30, 31, 32, 33, 40, 42, 43, 44 und 49,
C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84,
C.I. Vat Black 1, 2, 7, 8, 9, 13, 14, 16, 19, 20, 22, 25, 27, 28, 29, 30, 31, 32, 34, 36, 56, 57, 58, 63, 64 und 65.

Reaktivfarbstoffe sind für das Bedrucken von natürlichen und synthetischen Cellulosefaser wie beispielsweise Baumwolle, Viskose, Leinen) und Seide besonders geeignet. Beispiele für Reaktivfarbstoffe sind Monochlortriazinfarbstoffe, beispielsweise C.I. Reactive Orange 13, weiterhin Vinylsulfon-, bi- und multifunktionelle Reaktivfarbstoffe. Unter den Reaktivfarbstoffen sind die Monochlortriazinfarbstoffe im Direktdruck und die Vinylsulfonfarbstoffe im 2-Phasendruck besonders bevorzugt.

In einer Ausführungsform der vorliegenden Erfindung können erfindungsgemäße wässrige Dispersionen enthalten:
Im Bereich von 0,1 bis 200 g/l, bevorzugt 1 bis 150 g/l Copolymer (A),
im Bereich von 0,1 bis 200 g/l, bevorzugt 1 bis 150 g/l Farbmittel (B).

Erfindungsgemäße wässrige Dispersion weist in einer Ausführungsform der vorliegenden Erfindung einen Feststoffgehalt von 5 bis 40 Gew.-%, insbesondere 10 bis 35 Gew.-%, auf.

In unneutralisierter Form weist erfindungsgemäße wässrige Dispersion eine relativ niedrige Viskosität auf, beispielsweise bis zu 600 mPa·s, gemessen bei 23°C. Sie hat daher in vielen Fällen eine dünnflüssige Erscheinungsform. Erfindungsgemäße wässrige Dispersion ist daher leicht handhabbar und kann problemlos dosiert, in Wasser gelöst, mit Wasser verdünnt oder umgepumpt werden. Durch Neutralisation, z. B. auf einen pH-Wert von mehr als 5,5, vorzugsweise mehr als 6, insbesondere 8 bis 10, wird Copolymer (A) wasserlöslich, und die Viskosität der erfindungsgemäßen wässrigen Dispersion steigt stark an. Geeignete Neutralisierungsmittel sind z. B. Natriumhydroxid, Kaliumhydroxid, Ammoniumhydroxid, Amine wie Triethylamin, Triethanolamin, Monoethanolamin und andere alkalische Substanzen.

In einer Ausführungsform der vorliegenden Erfindung handelt es sich bei erfindungsgemäßer wässriger Dispersion um eine Druckpaste, beispielsweise um eine Pigmentdruckpaste.

In einer Ausführungsform der vorliegenden Erfindung sind erfindungsgemäße wässrige Dispersionen frei von Emulgatoren, d. h., sie enthalten 0,01 Gew.-% oder weniger Emulgator.

In einer anderen Ausführungsform der vorliegenden Erfindung enthält erfindungsgemäße wässrige Dispersion mindestens (C) einen anionischen Emulgator und/oder einen nichtionischen Emulgator, kurz auch allgemein Emulgator (C) oder speziell anionischer Emulgator (C) bzw. nichtionischer Emulgator (C) genannt.

Beispiele für anionische Emulgatoren (C) sind Alk(en)ylsulfate. Als Alk(en)ylsulfate werden die Alkali- und insbesondere die Natriumsalze der Schwefelsäurehalbester der C₁₂-C₁₈-Fettalkohole, beispielsweise aus Kokosfettalkohol, Talgfettalkohol, Lauryl-, Myristyl-, Cetyl- oder Stearylalkohol oder der C₁₀-C₂₀-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest oder einen Alkenylrest mit einer cis-Doppelbindung enthalten, die ein analoges Abbauverhalten besitzen wie die adäquaten Verbindungen auf der Basis von fettchemischen Rohstoffen. C₁₂-C₁₆-Alkylsulfate und C₁₂-C₁₅-Alkylsulfate sowie C₁₄-C₁₅-Alkylsulfate sind bevorzugt. Auch 2,3-Alkylsulfate, welche beispielsweise gemäß US 3,234,258 oder US 5,075,041 hergestellt werden und als Handelsprodukte der Shell Oil Company unter dem Namen DAN® erhalten werden können, sind geeignete anionische Emulgatoren (C).

Auch die Schwefelsäuremonoester der mit 1 bis 6 Mol Ethylenoxid ethoxylierten geradkettigen oder verzweigten C₇-C₂₁-Alkohole, wie 2-Methyl-verzweigte C₉-C₁₁-Alkohole mit im Durchschnitt 3,5 Mol Ethylenoxid (EO), oder C₁₂-C₁₈-Fettalkohole mit 1 bis 4 EO, sind geeignet.

Weitere geeignete anionische Emulgatoren (C) sind auch die Salze der Alkylsulfobernsteinsäure, die auch als Sulfosuccinate oder als Sulfobernsteinsäureester bezeichnet werden und die Monoester und/oder Diester der Sulfobernsteinsäure mit Alkoholen, vorzugsweise Fettalkoholen und insbesondere ethoxylierten Fettalkoholen darstellen. Bevorzugte Sulfosuccinate enthalten C₈-C₁₈- Fettalkoholreste oder Mischungen aus diesen. Insbesondere bevorzugte Sulfosuccinate enthalten einen Fettalkoholrest, der sich von ethoxylierten Fettalkoholen ableitet. Dabei sind wiederum Sulfosuccinate, deren Fettalkohol-Reste sich von ethoxylierten Fettalkoholen mit engerr Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Bevorzugte anionische Emulgatoren (C) sind Sulfate oder Sulfonate von organischen Verbindungen und ihre Alkalimetallsalze, z. B. Natriumlaurylsulfat, Natriumtridecylethersulfate, Dioctylsulfosuccinat Natriumsalz und Natriumsalze von Alkylarylpolyethersulfonaten.

Typische nichtionische Emulgatoren (C) sind Alkylarylpolyetheralkohole und Ethylenoxid-Propylenoxid-Copolymere, weiterhin mehrfach mit C₂-C₄-Alkylenoxid alkoxylierte C₁₁-C₃₀-Oxoalkohole oder insbesondere mehrfach mit C₂-C₄-Alkylenoxid alkoxylierte C₁₀-C₃₀-Fettalkohole.

Bevorzugte Emulgatoren (C) weisen die allgemeine Formel III auf

R¹-O-(CH₂-CHR²-O)ₙ-X III

worin R¹ für im Wesentlichen unverzweigtes C₆-C₃₀-Alkyl steht,
R² gleich oder verschieden sein kann und unabhängig voneinander für Wasserstoff oder Methyl steht,
X für Wasserstoff oder SO₃M steht,
M für Wasserstoff oder ein Alkalimetall steht, bevorzugt K und insbesondere für Na, und
n für eine ganze Zahl im Bereich von 2 bis 100, bevorzugt 3 bis 50 steht.

In einer Ausführungsform der vorliegenden Erfindung enthält erfindungsgemäße wässrige Dispersion im Bereich von 0 bis 5, bevorzugt 0,01 bis 3 g/l Emulgator (C).

In einer Ausführungsform der vorliegenden Erfindung enthält erfindungsgemäße wässrige Dispersion eine Kombination aus mindestens einem anionischen Emulgator (C) und mindestens einem nichtionischen Emulgator (C).

Erfindungsgemäße wässrige Dispersionen können weiterhin einen oder mehrere Hilfsstoffe (D) enthalten.

Unter Hilfsstoffen (D) sind beispielsweise Bindemittel, Lösemittel, Entschäumer, Netzmittel, Griffverbesserer, Dispergiermittel, Wasserrückhaltemittel, Antiabsetzmittel und/oder Biozide zu verstehen. Bevorzugte Hilfsstoffe sind Entschäumer.

Bindemittel sind insbesondere dann ein Hilfsstoff (D), wenn man als Farbmittel (B) ein Pigment wählt. Wenn man als Farbmittel (B) einen Dispersionsfarbstoff oder einen Reaktivfarbstoff wählt, setzt man vorzugsweise kein Bindemittel ein.

Bindemittel im Sinne der vorliegenden Erfindung sind emulgierte oder dispergierte filmbildende Polymere, die auch Copolymere mit einschließen. Als Bindemittel kann man sowohl Dispersionen, Emulsionen als auch Organisole von (Co)polymeren wie beispielsweise Polyacrylaten, Polyurethanen, Polybutadien, Polyolefinen wie Polyethylen oder Polypropylen und deren Copolymere verwenden. Bevorzugt sind Dispersionen oder Emulsionen von Polyacrylaten, auch Acrylatbindemittel genannt, oder Polyurethanen, auch Polyurethanbindemittel genannt.

In einer bevorzugten Ausführungsform der vorliegenden Erfindung wählt man Bindemittel aus Acrylatbindemitteln und Polyurethanbindemitteln.

Geeignete Acrylatbindemittel sind solche Copolymerisate, insbesondere Emulsionscopolymerisate von mindestens einer einfach ethylenisch ungesättigten Carbonsäure oder Dicarbonsäure wie beispielsweise Maleinsäure, Fumarsäure, Crotonsäure, Itaconsäure oder bevorzugt (Meth)acrylsäure mit mindestens einem Comonomer wie beispielsweise mindestens einem C₁-C₁₀-Alkylester von mindestens einer einfach ethylenisch ungesättigten Carbonsäure oder Dicarbonsäure, insbesondere seien Methyl(meth)acrylat, Ethylacrylat, n-Butylacrylat und 2-Ethylhexylacrylat genannt, und/oder mindestens einem weiteren Comonomer, gewählt aus beispielsweise Vinylaromaten, beispielsweise para-Methylstyrol, α-Methylstyrol und insbesondere Styrol, und stickstoffhaltigen Comonomeren wie (Meth)acrylamid oder (Meth)acrylnitril.

In einer Ausführungsform der vorliegenden Erfindung enthalten Acrylatbindemittel mindestens ein reaktives Comonomer einpolymerisiert, gewählt aus Glycidyl(meth)acrylat, Acetoacetyl(meth)acrylat und N-Methylol-(meth)acrylamid. In einer bevorzugten Ausführungsform der vorliegenden Erfindung enthalten Acrylatbindemittel keine Comonomere einpolymerisiert, die beim Erhitzen auf Temperaturen im Bereich von 100 bis 180°C weniger als 1 Äquivalent Aldehyd, insbesondere weniger als 1 Äquivalent Formaldehyd pro Mol abspalten können, also insbesondere kein N-Methylol-(meth)acrylamid.

Geeignete Polyurethanbindemittel sind hydroxylterminierte Polyurethane, die durch Reaktion von mindestens einem Polyesterol, beispielsweise einem Kondensationsprodukt einer aliphatischen Dicarbonsäure wie Bernsteinsäure, Glutarsäure und insbesondere Adipinsäure mit mindestens einem aliphatischen Diol, beispielsweise 1,6-Hexandiol, 1,4-Butandiol, Neopentylglykol, Ethylenglykol oder Diethylenglykol, und einem Diisocyanat oder Polyisocyanat und gegebenenfalls weiteren Reaktionspartnern hergestellt werden können. Geeignete Diisocyanate sind aliphatische, cycloaliphatische und aromatische Diisocyanate, insbesondere Hexamethylendiisocyanat (HDI), Dodecamethylendiisocyanat, 4,4'-Diisocyanatocylohexylmethan (MDI), Cyclohexan-1,4-diisocyanat, Isophorondiisocyanat (IPDI) und aromatische Diisocyanate wie beispielsweise Toluylendiisocyanat (TDI).

Als weitere Reaktionspartner seien beispielsweise säuregruppenhaltige Moleküle, insbesondere säuregruppenhaltige Diole und säuregruppenhaltige Diamine genannt, z. B. 3,3-Dihydroxymethylolpropionsäure und die Verbindung der Formel IV.

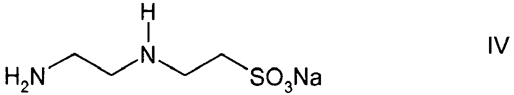

Bindemittel kann man als Emulsionen bzw. Dispersionen beispielsweise mit einem Feststoffgehalt im Bereich von 1 bis 75%, bevorzugt von 10 bis 66% einsetzen.

Natürlich kann Bindemittel noch ein oder mehrere herstellungsübliche Zusätze enthalten, beispielsweise ein oder mehrere Tenside.

Wenn man als Hilfsstoff (D) ein oder mehrere Bindemittel einsetzt, so ist es bevorzugt, das oder die Bindemittel mit einem oder mehreren Vernetzern zu kombinieren. Geeignete Vernetzer sind vorzugsweise gewählt aus Isocyanuraten, die hydrophiliert sein können, Polyglycidylethern mit 2 bis 5 Glycidylgruppen pro Molekül, Carbodiimiden, insbesondere polymeren Carbodiimiden, Melamin-Formaldehyd-Harzen und Ethylenharnstoff-Formaldehyd-Harzen.

Erfindungsgemäße wässrige Dispersionen können als Hilfsstoff (D) ein oder mehrere Lösungsmittel enthalten, darunter sind im Rahmen der vorliegenden Erfindung organische Lösungsmittel wie beispielsweise Methanol, Ethanol oder Isopropanol zu verstehen.

Erfindungsgemäße wässrige Dispersionen können als Hilfsstoff (D) einen oder mehrere Entschäumer enthalten. Geeignete Entschäumer sind beispielsweise silikonhaltige Entschäumer wie beispielsweise solche der Formel HO-(CH₂)₃-Si(CH₃)[OSi(CH₃)₃]₂ und HO-(CH₂)₃-Si(CH₃)[OSi(CH₃)₃][OSi(CH₃)₂OSi(CH₃)₃], nicht alkoxyliert oder mit bis zu 20 Äquivalenten Alkylenoxid und insbesondere Ethylenoxid alkoxyliert. Auch Silikon-freie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearinsäure-C₁₀-C₂₀-alkylester, bei denen C₈-C₂₀-Alkyl, bevorzugt C₁₀-C₂₀-Alkyl unverzweigt oder verzweigt sein kann. Weitere geeignete Entschäumer sind Phosphorsäuretrialkylester wie beispielsweise Triisobutylphosphat.

Erfindungsgemäße wässrige Dispersionen können beispielsweise ein oder mehrere Netzmittel enthalten, bevorzugt schaumarme Netzmittel, da Schaumbildung die Qualität der Behandlung durch Bildung von Unegalitäten beeinträchtigen kann. Als Netzmittel werden beispielsweise eingesetzt: Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Erfindungsgemäße wässrige Dispersionen können weiterhin einen oder mehrere Griffverbesserer enthalten, die üblicherweise aus Silikonen, insbesondere Polydimethylsiloxanen, und Fettsäureestern ausgewählt werden.

Erfindungsgemäße wässrige Dispersionen können ein oder mehrere Dispergiermittel enthalten. Beispiele für geeignete Dispergiermittel sind aryl- oder alkylsubstituierte Polyglykolether, weiterhin Substanzen, die in US 4,218,218 beschrieben sind, und Homologe mit y (aus den Formeln aus US 4,218,218) im Bereich von 10 bis 37.

Erfindungsgemäße wässrige Dispersionen können ein oder mehrere Wasserrückhaltemittel enthalten. Beispiel für ein geeignetes Wasserrückhaltemittel ist Harnstoff.

Erfindungsgemäße wässrige Dispersionen können ein oder mehrere Biozide enthalten. Geeignete Biozide sind beispielsweise als Proxel-Marken im Handel befindlich. Beispielhaft seien genannt: 1,2-Benzisothiazolin-3-on ("BIT"), (kommerziell erhältlich als Proxel®-Marken der Fa. Avecia Lim.) und dessen Alkalimetallsalze; andere geeignete Biozide sind 2-Methyl-2H-isothiazol-3-on ("MIT") und 5-Chlor-2-methyl-2H-isothiazol-3-on ("CIT").

Beispiele für geeignete Antiabsetzmittel sind Silikate und Kieselgele, beispielsweise mit einem mittleren Partikeldurchmesser (insbesondere Sekundärpartikeldurchmesser) im Bereich von 10 bis 500 nm, insbesondere pyrogene Kieselgele. Geeignete pyrogene Kieselgele sind beispielsweise als Aerosil®-Marken im Handel.

Erfindungsgemäße wässrige Dispersionen können als Hilfsstoff (D) insbesondere dann, wenn man sie zum Beschichten verwenden möchte, ein oder mehrere Aufschäummittel enthalten, beispielsweise Ammoniumsalze von Fettsäuren, bevorzugt Ammoniumstearat.

Dabei ist es möglich, dass ein Hilfsstoff (D) mehrere Funktionen übernimmt. Beispielsweise können mehrfach ethoxylierte Fettalkohole wie beispielsweise n-C₁₈H₃₇O(CH₂CH₂O)₁₅H gleichzeitig als Netzmittel, Emulgator und schaumarmes Dispergiermittel wirken.

In einer Ausführungsform der vorliegenden Erfindung enthält erfindungsgemäße wässrige Dispersion im Bereich von insgesamt null bis 40 Gew.-% Hilfsstoff (D), bevorzugt sind 1 bis 35 gew.-% Hilfsstoff (D).

In einer Ausführungsform der vorliegenden Erfindung enthält erfindungsgemäße wässrige Dispersion als Hilfsstoff (D) einen Verdicker auf Acrylatbasis. Darunter sind Verdicker zu verstehen, die ein oder mehr vernetzte Polyacrylate enthalten, insbesondere sind Copolymere von (Meth)acrylsäure mit (Meth)acrylamid und einem oder mehreren zweifach ethylenisch ungesättigten Comonomeren zu nennen, wobei die (Meth)acrylsäureeinheiten des betreffenden Copolymers mit leichtflüchtigem Amin, insbesondere mit Ammoniak neutralisiert sind. Beim Fixierprozess wird leichtflüchtiges Amin, insbesondere Ammoniak freigesetzt, wodurch der pH-Wert gesenkt wird und die eigentliche Fixierung beginnt. Das für die Fixierung notwendige Absenken des pH-Wertes kann alternativ durch Zusatz von nichtflüchtigen Säuren wie z.B. Zitronensäure, Bernsteinsäure, Glutarsäure oder Äpfelsäure erfolgen. Ebenso sind Di-Ammoniumphosphat und Natrium-di-Ammoniumphosphat zum Absenken des pH-Werts geeignet.

Ganz besonders als Hilfsstoff (D) bevorzugte Verdicker auf Acrylatbasis sind gewählt aus Copolymeren von 85 bis 95 Gew.-% Acrylsäure, 4 bis 14 Gew.-% Acrylamid und 0,01 bis maximal 1 Gew.-% des (Meth)acrylamidderivats der Formel VI 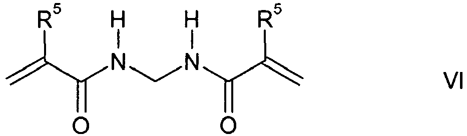 mit Molekulargewichten M_{w} im Bereich von 100.000 bis 2.000.000 g/mol, in denen die Reste R⁵ verschieden oder gleich sein und Methyl oder Wasserstoff bedeuten können.

Der Einsatz von Verdicker auf Acrylatbasis als Hilfsstoff (D) ist dann bevorzugt, wenn man als Farbmittel (B) ein oder mehrere Pigmente wählt. Man erhält, wenn man Textil mit erfindungsgemäßer wässriger Dispersion koloriert, die neben einem Copolymer (A) und einem Pigment als Farbmittel (B) mindestens einen Verdicker auf Acrylatbasis als Hilfsstoff (D) enthält, koloriertes Textil mit besonders guten Echtheiten.

Wenn man als Farbmittel (B) einen oder mehrere Reaktivfarbstoffe oder einen oder mehrere Dispersionsfarbstoffe wählt, so ist es bevorzugt, als Hilfsmittel (D) keinen Verdicker auf Acrylatbasis einzusetzen.

Der Rest von erfindungsgemäßer wässriger Dispersion ist vorzugsweise Wasser.

Ein weiterer Gegenstand der vorliegenden Erfindung ist ein Verfahren zur Herstellung von erfindungsgemäßen wässrigen Dispersionen. Zur Herstellung von erfindungsgemäßen Dispersionen geht man vorzugsweise so vor, dass man zunächst eine wässrige Dispersion von Copolymer (A) herstellt und die so erhaltene wässrige Dispersion mit Farbmittel (B) vermischt.

Zur Herstellung von wässrigen Dispersionen von Copolymer (A) kann man Copolymer
(A) herstellen und danach in Wasser dispergieren. Es ist jedoch bevorzugt, Copolymer (A) so herzustellen, dass es als wässrige Dispersion anfällt.

Speziell ist Gegenstand der vorliegenden Erfindung ein Verfahren zur Herstellung einer wässrigen Dispersion eines Copolymers (A) durch radikalische Copolymerisation von
(a) wenigstens einer ethylenisch ungesättigten Carbonsäure,
(b) wenigstens einem nichtionischen ethylenisch ungesättigten Tensidmonomer der allgemeinen Formel I

   R¹-O-(CH₂-CHR²-O)ₙ-CO-C(R³)=CH₂ I

   R¹-O-(CH₂-CHR²-O)ₙ-O-(CH₂)ₘCH=CH₂ II

   worin R¹ für im Wesentlichen unverzweigtes C₆-C₃₀-Alkyl steht,
   R² jeweils gleich oder verschieden ist und für Wasserstoff oder Methyl steht,
   R³ für Wasserstoff oder Methyl steht und
   n für eine ganze Zahl von 2 bis 100 steht,
   m gewählt wird aus null oder eins,
(c) wenigstens einem C₁-C₂-Alkylmethacrylat,
(d) wenigstens einem C₂-C₄-Alkylacrylat,
(e) gegebenenfalls mindestens einem mehrfach ethylenisch ungesättigten Monomer und Vermischen mit mindestens einem Farbmittel (B).

Copolymer (A) ist nach verschiedenen Verfahren herstellbar, vorzugsweise durch Emulsionspolymerisation. Dabei wird im Rahmen der vorliegenden Erfindung der Ausdruck Emulsionspolymerisation auch dann verwendet, wenn es sich um eine Emulsionscopolymerisation handelt.

Zur Polymerisation verwendet man einen Polymerisationsinitiator. Thermisch aktivierbare radikalische Polymerisationsinitiatoren sind bevorzugt.

Geeignete thermisch aktivierbare radikalische Polymerisationsinitiatoren sind vor allem solche des Peroxy- und Azotyps. Hierzu zählen unter anderem Wasserstoffperoxid, Peressigsäure, tert.-Butylhydroperoxid, Di-tert.-butylperoxid, Dibenzoylperoxid, Benzoylhydroperoxid, meta-Chlorperbenzoesäure, 2,4-Dichlorbenzoylperoxid, 2,5-Dimethyl-2,5-bis(hydroperoxy)hexan, Perbenzoesäure, tert.-Butylperoxypivalat, tert.-Butylperacetat, Dilauroylperoxid, Dicapryloylperoxid, Distearoylperoxid, Dibenzoylperoxid, Diisopropylperoxydicarbonat, Didecylperoxydicarbonat, Dieicosylperoxydicarbonat, Di-t-butylperbenzoate, Azobisisobutyronitril, 2,2'-Azobis-2,4-dimethylvaleronitril, Ammoniumpersulfat, Kaliumpersulfat, Natriumpersulfat und Natriumperphosphat.

Persulfate (Peroxodisulfate), insbesondere Natriumpersulfat, sind besonders bevorzugt.

Bei der Durchführung der Emulsionspolymerisation wird Polymerisationsinitiator in ausreichender Menge verwendet, um die Polymerisationsreaktion zu initiieren. Polymerisationsinitiator wird üblicherweise in einer Menge von etwa 0,01 bis 3 Gew.-%, bezogen auf das Gesamtgewicht der eingesetzten Monomere, verwendet. Die Polymerisationsinitiatormenge beträgt vorzugsweise etwa 0,05 bis 2 Gew.-% und insbesondere 0,1 bis 1 Gew.-%, bezogen auf das Gesamtgewicht der eingesetzten Monomere.

Die Emulsionspolymerisation erfolgt üblicherweise bei 35 bis 100 °C. Sie kann sowohl als batch-Prozess als auch in Form eines Zulaufverfahrens durchgeführt werden. Bevorzugt ist das Zulaufverfahren, bei dem man zumindest einen Teil des Polymerisationsinitiators und gegebenenfalls einen Teil der Monomeren vorlegt, auf Polymerisationstemperatur erhitzt und anschließend den Rest des Polymerisationsansatzes, üblicherweise über mehrere getrennte Zuläufe, von denen einer oder mehrere die Monomeren in reiner oder emulgierter Form enthalten, kontinuierlich oder stufenweise unter Aufrechterhaltung der Polymerisation zuführt. Vorzugsweise erfolgt der Monomerzulauf in Form einer Monomeremulsion. Parallel zum Monomerzulauf kann weiterer Polymerisationsinitiator zudosiert werden.

In bevorzugten Ausführungsformen legt man die gesamte Polymerisationsinitiatormenge vor, d. h. parallel zum Monomerzulauf erfolgt keine weitere Initiatordosierung. Es gefunden, dass diese Vorgehensweise zu besonders hoher Transparenz der erfindungsgemäßen wässrigen Dispersion führt.

In einer bevorzugten Ausführungsform legt man zur Herstellung von Copolymer (A) einen thermisch aktivierbaren Polymerisationsinitiator vor und lässt ein Gemisch von Monomeren (a), (b), (c), (d) und gegebenenfalls (e) zulaufen und copolymerisiert. Bevor man den Zulauf des Monomerengemisches startet, bringt man dazu die Vorlage auf die Aktivierungstemperatur des thermisch aktivierbaren radikalischen Polymerisationsinitiators oder eine höhere Temperatur. Als Aktivierungstemperatur wird dabei die Temperatur angesehen, bei der die Hälfte des Polymerisationsinitiator nach zehn Stunden inaktiv ist.

Nach beendeter Emulsionspolymerisation kann man die so erhältliche wässrige Dispersion von Copolymer (A) einer chemischen Desodorierung unterziehen. Bei der chemischen Desodorierung wird nach Ende der eigentlichen Emulsionspolymerisation weiterer Initiator, z.B. ein Redoxinitiator zugesetzt. Zur chemischen Desodorierung geeignete Redoxinitiatoren umfassen als oxidierende Komponente beispielsweise wenigstens ein organisches Peroxid und/oder Hydroperoxid wie Wasserstoffperoxid, tert.-Butylperoxid, Cumolhydroperoxid, Pinanhydroperoxid, Diisopropylphenylhydroperoxid, Dibenzoylperoxid, Dilauroylperoxid und Diacetylperoxid und als reduzierend wirkende Komponente beispielsweise Eisen(II)-salze, Alkalimetallsulfite, Ascorbinsäure, Acetonbisulfit-Addukt und/oder ein Alkalimetallsalz der Hydroxymethansulfinsäure.

Wässrige Dispersionen von Copolymer (A) verhalten sich wie Assoziativverdicker. Assoziativverdicker zeichnen sich in der gelösten, hochviskosen Form durch hohe Lichtdurchlässigkeit bzw. Transparenz aus und eignen sich z. B. als Verdickungsmittel bzw. Rheologiemodifizierer in erfindungsgemäßen wässrigen Dispersionen.

Anschließend vermischt man mit mindestens einem Farbmittel (B), gewählt aus Pigmenten und vorzugsweise aus Dispersionsfarbstoffen, Säurefarbstoffen, Metallkomplexfarbstoffen, Küpenfarbstoffen und Reaktivfarbstoffen. Besonders bevorzugt sind Reaktivfarbstoffe und Dispersionsfarbstoffe. Wünscht man Pigment als Farbmittel (B) einzusetzen, so setzt man es vorzugsweise in Form einer Pigmentzubereitung ein. Das Vermischen kann beispielsweise durch Verrühren erfolgen, besonders bevorzugt ist das Verrühren mit einem Schnellrührer.

In einer Ausführungsform der vorliegenden Erfindung geht man so vor, dass man mindestens einen anionischen und/oder einen nichtionischen Emulgator (C) zusetzt, und zwar vor, während oder nach der Copolymerisation, gegebenenfalls im Gemisch mit einem oder mehreren anionischen Emulgatoren (C).

Als nichtionische Emulgatoren (C) werden alkoxylierte, vorzugsweise ethoxylierte, insbesondere ethoxylierte primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, zum Beispiel aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise C₁₂-C₁₄-Alkohole mit 3 EO, 4 EO oder 7 EO, C₉-C₁₁-Alkohol mit 7 EO, C₁₃-C₁₅-Alkohole mit 3 EO, 5 EO, 7 EO oder 8 EO, C₁₂-C₁₈-Alkohole mit 3 EO, 5 EO oder 7 EO und Mischungen aus diesen, wie Mischungen aus C₁₂-C₁₄-Alkohol mit 3 EO und C₁₂-C₁₈-Alkohol mit 7 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO. Auch nichtionische Tenside, die EO- und PO-Gruppen zusammen im Molekül enthalten, sind einsetzbar. Hierbei können Blockcopolymere mit EO-PO-Blockeinheiten bzw. PO-EO-Blockeinheiten eingesetzt werden, aber auch EO-PO-EO-Copolymere bzw. PO-EO-PO-Copolymere. Selbstverständlich sind auch gemischt alkoxylierte Niotenside einsetzbar, in denen EO-und PO-Einheiten nicht blockweise, sondern statistisch verteilt sind. Solche Produkte sind durch gleichzeitige Einwirkung von Ethylen- und Propylenoxid auf Fettalkohole erhältlich.

Als nichtionische Emulgatoren (C) können auch Alkylglykoside der allgemeinen Formel V

R⁴O(G)ₓ V

eingesetzt werden, worin R⁴ für einen primären geradkettigen oder methylverzweigten, insbesondere in 2-Stellung methylverzweigten aliphatischen Rest mit 8 bis 22, vorzugsweise 12 bis 18 C-Atomen steht und G für eine Glykosideinheit mit 5 oder 6 C-Atomen, vorzugsweise für Glucose, steht. Der Oligomerisierungsgrad x, der die Verteilung von Monoglykosiden und Oligoglykosiden angibt, ist eine beliebige Zahl zwischen 1 und 10; vorzugsweise liegt x bei 1,2 bis 1,4.

Eine weitere Klasse bevorzugt eingesetzter nichtionischer Emulgatoren (C), die entweder als alleiniger nichtionischer Emulgator (C) oder in Kombination mit anderen nichtionischen Emulgatoren (C) oder mit anionischen Emulgatoren (C) eingesetzt werden, sind alkoxylierte, vorzugsweise ethoxylierte oder ethoxylierte und propoxylierte Fettsäuren, die man beispielsweise durch katalytische Alkoxylierung von Fettsäurealkylestern, vorzugsweise von Fettsäurealkylestern mit 1 bis 4 Kohlenstoffatomen in der Alkylkette, insbesondere Fettsäuremethylester, herstellen kann. Ein geeignetes Verfahren ist beispielsweise in WO 90/13533 beschrieben.

Bevorzugte Emulgatoren (C) weisen die allgemeine Formel III auf

R¹-O-(CH₂-CHR²-O)ₙ-X III

worin R¹ für im Wesentlichen unverzweigtes C₆-C₃₀-Alkyl steht,
R² gleich oder verschieden sein kann und unabhängig voneinander für Wasserstoff oder Methyl steht,
X für Wasserstoff oder SO₃M steht,
M für H⁺, Ammonium oder von einem flüchtigen Amin wie beispielsweise Triethylamin oder Trimethylamin abgeleitetes Ammonium, oder für ein quaternäres Ammoniumion, oder vorzugsweise ein Alkalimetallkation steht, insbesondere für Na⁺, und n für eine ganze Zahl im Bereich von 2 bis 100, bevorzugt 3 bis 50 steht.

In einer Ausführungsform der vorliegenden Erfindung wählt man eine Kombination aus mindestens einem anionischen Emulgator (C) und mindestens einem nichtionischen Emulgator (C).

Emulgator(en) (C) kann man vor, während oder nach der Herstellung von Copolymer (A) und insbesondere vor oder während der Emulsionspolymerisation zur Herstellung von Copolymer (A) zusetzen.

Ein weiterer Gegenstand der vorliegenden Erfindung ist die Verwendung von erfindungsgemäßen wässrigen Dispersionen zum Kolorieren von textilen Substraten. Ein weiterer Gegenstand der vorliegenden Erfindung sind Verfahren zum Kolorieren von textilen Substraten unter Verwendung von erfindungsgemäßen wässrigen Dispersionen, im Rahmen der vorliegenden Erfindung auch erfindungsgemäße8s) Kolorierungsverfahren genannt.

Unter textilen Substraten bzw. Textilien sind im Rahmen der vorliegenden Erfindung Textilfasern und vorzugsweise flächig ausgebildete textile Halb- und Fertigfabrikate und daraus hergestellte Fertigwaren zu verstehen, die neben Textilien für die Bekleidungsindustrie beispielsweise auch technische Textilien, Teppiche und andere Heimtextilien sowie technischen Zwecken dienende textile Gebilde umfassen. Zu Textilien gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze, Gewebe, Gewirke, Vliesstoffe und Watten. Textil bzw. Textilien können natürlichen Ursprungs sein, beispielsweise Baumwolle, Wolle oder Flachs, oder synthetisch, beispielsweise Polyamid, Polyester, modifiziertem Polyester, Polyestermischgewebe, Polyamidmischgewebe, Polyacrylnitril, Triacetat, Acetat, Polycarbonat, Polypropylen, Polyvinylchlorid, Polyestermikrofasern und Glasfasergewebe.

Textile Substrate kann man in unvorbehandeltem oder vorbehandeltem Zustand einsetzen, beispielsweise kann man, wenn man als Textil Baumwolle einzusetzen wünscht, Baumwolle in gebleichtem oder in merzerisiertem Zustand einsetzen.

Das erfindungsgemäße Kolorierungsverfahren führt man in der Regel so durch, dass man textiles Substrat mit erfindungsgemäßer wässriger Dispersion behandelt. Das Behandeln kann man beispielsweise durch Klotzen, Imprägnieren, Aufrakeln, Be- oder Aufsprühen durchführen. Bevorzugt ist es, das erfindungsgemäße Kolorierungsverfahren als Druckverfahren auszuführen.

Beispielsweise sind Foulards bevorzugt. In einer anderen bevorzugten Ausführungsform der vorliegenden Erfindung bringt man erfindungsgemäße wässrige Dispersion mit einer Rakel auf, beispielsweise einer Messerrakel, einer Luftrakel oder einer Rollrakel Als Druckverfahren kommen insbesondere Siebdruckverfahren in Frage.

Siebdruckverfahren sind an sich bekannt. Man kann mit einer Druckpaste bedrucken, die man durch ein feinmaschiges Netz vollflächig oder in Form von Mustern auf Textil aufbringt, und indem man anschließend thermisch behandelt. Für die thermische Behandlung sind Temperaturen im Bereich von 20 bis 180°C geeignet, bevorzugt sind 50 bis 150°C, wobei man darauf achtet, dass die Temperatur nicht oberhalb der Schmelztemperatur des zu behandelnden textilen Substrats liegt.

Als Behandlungsdauer für die thermische Behandlung sind wenige Sekunden bis mehrere Minuten geeignet, beispielsweise 5 Sekunden bis 10 Minuten.

Geeignete Apparaturen für eine thermische Behandlung sind beispielsweise Trockenschränke, insbesondere Heißlufttrockenschränke.

Man kann aber auch bei Zimmertemperatur über mehrere Stunden trocknen.

In den meisten Fällen, insbesondere dann, wenn man als Farbmittel (B) einen Reaktivfarbstoff oder einen Dispersionsfarbstoff gewählt hat, genügt eine thermische Behandlung.

Vor oder vorzugsweise nach der thermischen Behandlung kann man erfindungsgemäß koloriertes textiles Substrat spülen oder waschen. Insbesondere dann, wenn man als Farbmittel einen Reaktivfarbstoff oder einen Dispersionsfarbstoff gewählt hat und kein Bindemittel eingesetzt hat, beobachtet man, dass sich Copolymer (A) leicht und vollständig auswaschen lässt.

Ein weiterer Gegenstand der vorliegenden Erfindung sind textile Substrate, koloriert nach dem erfindungsgemäßen Kolorierungsverfahren. Erfindungsgemäße textile Substrate weisen nicht nur brillante Farben auf, sondern auch insgesamt sehr gute anwendungstechnische Eigenschaften, beispielsweise Echtheiten, und einen sehr angenehmen Griff.

Ein weiterer Gegenstand der vorliegenden Erfindung sind Copolymere, erhältlich durch Copolymerisation von
(a) wenigstens einer ethylenisch ungesättigten Carbonsäure,
(b) wenigstens einem nichtionischen ethylenisch ungesättigten Tensidmonomer der allgemeinen Formel I

   R¹-O-(CH₂-CHR²-O)ₙ-CO-C(R³)=CH₂ I

   R¹-O-(CH₂-CHR²-O)ₙ-O-(CH₂)ₘCH=CH₂ II

   worin R¹ für im Wesentlichen unverzweigtes C₆-C₃₀-Alkyl steht,
   R² jeweils gleich oder verschieden ist und für Wasserstoff oder Methyl steht, R³ für Wasserstoff oder Methyl steht und
   n für eine ganze Zahl von 2 bis 100 steht,
   m gewählt wird aus null oder eins,
(c) wenigstens einem C₁-C₂-Alkylmethacrylat,
(d) wenigstens einem C₂-C₄-Alkylacrylat,
(e) gegebenenfalls mindestens einem mehrfach ethylenisch ungesättigten Monomer
(f) mindestens einem polaren Comonomer.

Beispiele für polare Comonomere (f) sind Vinylpropionat und insbesondere Vinylacetat, weiterhin gewählt aus (Meth)acrylamid und (Meth)acrylnitril.

In einer Ausführungsform der vorliegenden Erfindung enthält erfindungsgemäßes Copolymer einpolymerisiert:
10 bis 75 Gew.-%, vorzugsweise 20 bis 50 Gew.-% ethylenisch ungesättigte Carbonsäure (a),
0,1 bis 50 Gew.-%, vorzugsweise 1 bis 10 Gew.-% nichtionisches ethylenisch ungesättigtes Tensidmonomer (b),
0,5 bis 50 Gew.-%, vorzugsweise 5 bis 40 Gew.-% C₁-C₂-Alkylmethacrylat (c),
5 bis 85 Gew.-%, vorzugsweise 15 bis 70 Gew.-% C₂-C₄-Alkylacrylat (d),
0 bis 9 Gew.-% mehrfach ethylenisch ungesättigtes Comonomer (e) und
0,1 bis 30 Gew.-%, bevorzugt bis 20 Gew.-% polares Comonomer (f).

Erfindungsgemäßes Copolymer eignet sich besonders gut zur Durchführung des erfindungsgemäßen Verfahrens zur Kolorierung von Textil.

Die Erfindung wird durch Beispiele näher veranschaulicht.

Angaben in % sind Gew.-%, wenn nicht ausdrücklich anders angegeben.

### I. Herstellung von Copolymeren (A)

Die Herstellung von Copolymeren (A) erfolgte gemäß der nachstehend beschriebenen Methode. Die resultierende wässrige Dispersion enthielt die Copolymere (A) jeweils in deren Säureform.

In einer Rührapparatur, bestehend aus einem 4-Liter-Glasgefäß mit Ankerrührer (150 Upm), Rückflusskühler, Innenthermofühler und Dosierstation, wurden als Vorlage 736,73 g entsalztes Wasser (VE-Wasser) und 10,71 g anionischer Emulgator (C.1 a) 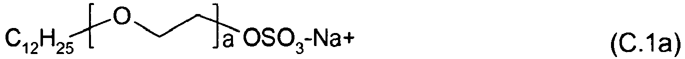 mit a = 3 als 28 Gew.-% Lösung in Wasser gemischt.

Zu dieser Lösung wurden bei 75 °C 4,23 g einer 7%igen wässrigen Natriumperoxodisulfat-Lösung zugegeben und die erhaltene Lösung bei 75 °C während 5 Minuten gerührt. Danach wurden bei 75 °C unter weiterem Rühren eine Emulsion, bestehend aus 457,04 g vollständig entsalztem Wasser (VE-Wasser), 183,67 g Methacrylsäure (a.1) und 360 g Ethylacrylat (c.1), 15 g Monomer (b.1) 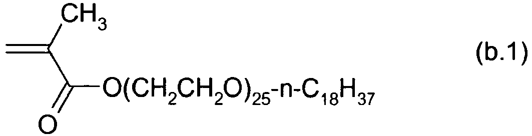 45 g Methylmethacrylat (d.1) und 10,7 g Emulgator (C.1 a) als 28% wässrige Lösung während 2 Stunden sowie gleichzeitig 12,1 g 7 Gew.-% wässrige Natriumperoxodisulfat-Lösung während 2 Stunden gleichmäßig zudosiert. Anschließend wurde die Reaktionsmischung noch 1 Std. bei 75°C gerührt und danach auf Zimmertemperatur abgekühlt. Bei Zimmertemperatur wurden 0,3 g einer 4 Gew.-% wässrigen Dissolvine® E-FE-6 Lösung (Kaliumsalz eines Eisen(II)-EDTA-Komplexes) und 12 g einer 5%igen wässrigen Wasserstoffperoxidlösung zugegeben und 90 g einer 1 %igen Ascorbinsäure-Lösung während 30 min. gleichmäßig zudosiert. Man erhielt eine wässrige Dispersion von Copolymer (A.1) mit 31 % Feststoffgehalt.

Die in der nachstehenden Tabelle 1 aufgeführten Dispersionen von Copolymeren (A.2) und (A.3) wurden analog hergestellt.

Feststoffgehalt: Die Dispersion wurde 30 min bei 140 °C getrocknet und der Feststoffgehalt in Prozent aus dem Verhältnis Trockenrückstand zu Einwaage bestimmt.

Teilchengröße: Die Dispersion wurde auf 0,01 % verdünnt und die Teilchengröße über Lichtstreuung im High Performance Particle Sizer 5001 (HPPS) von der Firma Malvern Instruments gemessen.

LD-Wert: Die Dispersion wurde auf 0,01 % verdünnt und die Lichtdurchlässigkeit (LD) der Dispersion im Vergleich zu reinem Wasser als ein Maß für die Teilchengröße optisch im Hach DR/2010 gemessen.

**Tabelle 1: Herstellung von erfindungsgemäßen wässrigen Dispersionen**

| Wässrige Dispersion | (A.1) | (A.2) | (A.3) |
|---|---|---|---|
| Methacrylsäure (a.1) [pphm] | 30,4 | 30,4 | 30,4 |
| Tensidmonomer (b.1) [pphm] | 2,5 | 2,5 | 2,5 |
| Methylmethacrylat (c.1) [pphm] | 7,5 | 7,5 | 7,5 |
| Ethylacrylat (d.1) [pphm] | 59,7 | 49,7 | 29,8 |
| n-Butylacrylat (d.2) [pphm] | - | 9,9 | 29,8 |
| Emulgator (C.1 a) [pphm] | 0,5/1 | 0,5/0,5 | 0,5/1 |
| Na₂S₂O₈-Vorlage [pphm] | 0,19 | 0,05 | 0,19 |
| Na₂S₂O₈-Zulauf [pphm] | - | 0,19 | - |
| Dauer Monomer-Zulauf [h] | 2 | 2 | 2 |
| Polymerisationstemperatur [°C] | 75 | 75 | 75 |
| Feststoffgehalt [%] | 31,1 | 30,4 | 30,9 |
| Teilchendurchmesser [nm] | 61 | 62 | 71 |
| LD - 0,01 %ig [%] | 97 | 98 | 97 |

| | | | |
|---|---|---|---|
| pphm: part per hundred monomers. | | | |

### II. Herstellung von erfindungsgemäßen wässrigen Dispersionen und Einsatz als Pigmentdruckpaste

Man stellte Pigmentdruckpasten durch Verrühren der Bestandteile gemäß Tabelle 2 her. Dabei ging man so vor, dass man 90% des eingesetzten Wassers vorlegte, dann die Bestandteile gemäß Tabelle 2 zusetzte, wobei man als vorletztes Copolymer (A) zufügte und als letztes das betreffende Pigment, und dann mit Wasser auf einen Liter auffüllte. Dann verrührte man 15 Minuten mit einem Schnellrührer des Typs Ultra-Turrax mit etwa 6000 Umdrehungen/min. Die so erhältlichen Pigmentdruckpasten hatten jeweils eine dynamische Viskosität von 65 dPa·s (23°C).

**Tabelle 2: Zusammensetzung von erfindungsgemäßen Pigmentdruckpasten und Vergleichsdruckpasten**

| | V-DP.1 | DP.2 | V-DP.3 | DP.4 |
|---|---|---|---|---|
| Copolymer, [g] | (V-A.4), 33 | (A.3), 72 | (V-A.4), 33 | (A.3), 72 |
| P(B.1)[g] | 10 | 10 | 10 | 10 |
| (D.1) [g] | 200 | 200 | - | - |
| (D.2) [g] | - | - | 200 | 200 |
| (D.3) [g] | 2 | 2 | 2 | 2 |
| NH₃ (25% in Wasser) [g] | - | 8 | - | 8 |
| Wasser [ml] | 755 | 700 | 750 | 700 |
| pH-Wert | 8,5 | 9 | 8,5 | 9 |

| | | | | |
|---|---|---|---|---|
| Mengenangaben sind stets telle quelle. | | | | |

Pigmentpräparation von (B.1):

In einer Rührwerkskugelmühle des Typs Drais Superflow DCP SF 12 wurden miteinander vermählen:

| | |
|---|---|
| 2640 g | Pigment Blau 15:3 |
| 460 g | n-C₁₈H₃₇O(CH₂CH₂O)₂₅H (C.2n) |
| 600 g | Glycerin |
| 2300 g | destilliertes Wasser |

Das Vermahlen wurde fortgesetzt, bis die Pigmentpartikel einen mittleren Durchmesser von 100 nm aufwiesen. Man erhielt die Pigmentpräparation P(B.1).

Bindemittel (D.1): Copolymerdispersion, pH-Wert 6,8, Feststoffgehalt 40 %, eines statistischen Emulsionscopolymerisats von 1 Gew.-Teil N-Methylolacrylamid, 1 Gew.-Teil Acrylsäure, 4 Gew.-Teilen Acrylamid, 26 Gew.-Teilen Styrol, 68 Gew.-Teilen n-Butylacrylat, Angaben in Gew.-Teilen sind bei den Bindemitteln jeweils bezogen auf gesamten Feststoff, mittlerer Partikeldurchmesser (Gewichtsmittel) 172 nm, bestimmt durch Coulter Counter

Bindemittel (D.2): Copolymerdispersion, pH-Wert 6,6, Feststoffgehalt 40 %, eines statistischen Emulsionscopolymerisats von 5 Gew.-Teil N-Methylolmethacrylamid, 1 Gew.-Teil Acrylsäure, 35 Gew.-Teilen Methylmethacrylat, 59 Gew.-Teilen Ethylacrylat, mittlerer Partikeldurchmesser (Gewichtsmittel) 185 nm, bestimmt durch Coulter Counter.

Entschäumer (D.3): HO(CH₂CH₂O)₃-(CH₂)₃-Si(CH₃)[OSi(CH₃)₃][OSi(CH₃)₂OSi(CH₃)₃]

(D.4): Natriumsalz der Paranitrobenzolsulfonsäure Vergleichs-Verdicker (V-A.4): statistisches Copolymer aus Acrylsäure (92 Gew.-%), Acrylamid (7,6 Gew.-%), Methylenbisacrylamid, quantitativ neutralisiert mit Ammoniak (25 Gew.-% in Wasser), Molekulargewicht M_{w} von ca. 150.000g/mol, in einer Wasserin-Weißöl-Emulsion, Feststoffgehalt 27 %.

### III. Bedrucken von Baumwolle mit erfindungsgemäßen wässrigen Formulierungen

Als Substrat wählte man ein Gewebe aus Baumwolle mit einem Flächengewicht von 220 g/m².

Drucken: Rakel 8 mm, Magnetzugstufe 3, Schablonengaze 70 mesh.

Thermische Behandlung: 2 Schritte, 1. Schritt: Trocknen: bei 130° C im Trockenschrank für 2 Minuten. Der anschließende 2. Schritt der thermischen Behandlung (Vernetzung) erfolgte jeweils auf einem Spannrahmen mit Heißluft durch dreiminütiges Erhitzen auf 150 °C. Man erhielt erfindungsgemäß bedruckte Baumwolle BW.2 und BW.4 bzw. Vergleichsbaumwolle V-BW.1 und V-BW.3.

**Tabelle 3: Eigenschaften von erfindungsgemäß bedruckter Baumwolle BW.2 und BW.4 bzw. Vergleichsbaumwolle V-BW.1 und V-BW.3**

| | V-BW.1 | BW.2 | V-BW.3 | BW.4 |
|---|---|---|---|---|
| Griff | weich | Sehr weich | Sehr weich | Sehr weich |
| Reibechtheit tr. | 4 | 4-5 | 4 | 4-5 |
| Reibechtheit n. | 3-4 | 3-4 | 3-4 | 3-4 |

| | | | | |
|---|---|---|---|---|
| tr.: trocken, n.: nass | | | | |

### IV Herstellung und Verwendung einer erfindungsgemäßen Beschichtungsformulierung

Man verrührte miteinander:
50 Gew.-% Copolymerdispersion (Bindemittel (D.5), pH-Wert 6,8, Feststoffgehalt 40 %, eines statistischen Emulsionscopolymerisats von
5 Gew.-Teil N-Methylolmethacrylamid, 1 Gew.-Teil Acrylsäure, 25 Gew.-Teilen Styrol,
50 Gew.-Teilen n-Butylacrylat, mittlerer Partikeldurchmesser (Gewichtsmittel) 172 nm, bestimmt durch Coulter Counter
15 Gew.-% Kaolin (B.2)
5 Gew.-% einer Pigmentpräparation von Titandioxid P(B.3), die hergestellt war durch Dispergieren von
54 Gew.-% TiO₂,
5,3 Gew.-% Diethylentriamin, ethoxyliert mit 50 mol Ethylenoxid/mol Diethylentriamin
0,5 Gew.-% Polyacrylat, M_{w} 70.000 g/mol, vollständig neutralisiert mit NaOH,

Rest war Wasser. Das Dispergieren wurde in einer Kugelmühle durchgeführt.
2 Gew.-% P(B.1)
10 Gew.-% (A.1),
18 Gew.-% Wasser.

Als Substrat wählte man ein bei einem Druck von 790 bar kalt kalandertes Gewebe aus Baumwolle mit einem Flächengewicht von 270 g/m².

Beschichtung: Messerrakel, Gap 0,1 mm

Thermische Behandlung: 2 Schritte, 1. Schritt: Trocknen: bei 100° C im Trockenschrank für 2 Minuten. Der anschließende 2. Schritt der thermischen Behandlung (Vernetzung) erfolgte jeweils auf einem Spannrahmen mit Heißluft durch dreiminütiges Erhitzen auf 150 °C.

Danach kalanderte man erneut bei 790 bar.

Man erhielt ein Textil mit einer hellblaue, leuchtende spritzwasserfeste Beschichtung, die sich leicht abwischen ließ.

Trockenreibechtheit 4-5

Nassreibechtheit: 4

Dieses Textil kann als Tischdecke verwendet werden.

**Tabelle 4: Zusammensetzung von erfindungsgemäßen Dispersions- und Reaktivdruckpasten und einer Vergleichsdruckpaste**

| | DP.5 | DP.6 | DP.7 | V-DP.8 |
|---|---|---|---|---|
| (A.3), [g] | 100 | 55 | 65 | |
| V A4 | | | | 35 |
| NH₃, 25%ig | 5 | 6 | 7 | |
| (D.4), [g] | 10 | | | |
| Soda | 30 | | | |
| Triisobutylphosphat | | 5 | 5 | 5 |
| Polyvinylpyrrolidon | | | 20 | 20 |
| Reaktiv Gelb 85 | 30 | | | |
| Dispers Blau 148 | | 40 | | |
| Dispers Blau 359 | | | 90 | 90 |

Der Druck von Druckpaste DP.5 erfolgte auf der gleichen Baumwolle wie bei den Beispielen BW.1 bis BW.4. Zur Fixierung wurde 10 min mit Sattdampf bei 102°C behandelt. Anschließend wurde der Reaktivdruck ausgewaschen. Hierzu wurde das bedruckte und fixierte Textil (Gewicht 80 g) im Flottenverhältnis von 1:10 mit warmem Wasser (60°C) unter Zusatz von 2 g/l Pfropfcopolymerisat 1 aus WO 2004/050982, Beispiel 1.1, zweimal jeweils 10 min gespült. Anschließend wurde unter sonst gleichen Bedingungen, jedoch bei 95°C, kochend geseift. Darauf folgend wurde das Textil bei 70°C ohne Chemikalienzusatz, Flottenverhältnis 1:10 über einen Zeitraum von 10 Minuten mit Wasser gespült. Im darauf folgenden Bad wird bei 60°C unter Zusatz von 1 g/l Essigsäure 50%ig im Flottenverhältnis von 1:10 für 10 min gespült. Der letzte Spülgang erfolgte bei 40°C im Flottenverhältnis von 1:10 für 10 min. Nach diesem letzten Spülgang wurde das Textil bei 85°C 20 min getrocknet. Im Anschluss wurden die Echtheiten bestimmt. Man erhielt einen Druck mit sehr scharfen, nicht ausgeflossenen Konturen.

| | |
|---|---|
| Reibechtheit trocken: | 4 bis 5 |
| Reibechtheit nass | 4 |
| Waschechtheit (60°C) | 4 bis 5 |

Der Druck von Druckpaste DP.6 erfolgte auf reinem Polyester mit einem Flächengewicht von 180g/m². Zur Fixierung wurde 7 min bei 175°C im Heißdampf fixiert. Anschließend wurde der Dispersionsdruck nachgereinigt. Hierzu wurde ein vierstufiger Nachreinigungsprozess verwendet. Im ersten Schritt wurde der Druck (80 g bedrucktes Textil) im Flottenverhältnis 1:10 bei 35°C über einen Zeitraum von 10 min gespült. Anschließend wurde in einem weiteren Spülbad bei 75°C, Flottenverhältnis 1:10 unter Zusatz von 6 g/l Natriumdithionit und 5 g/l Natronlauge (50 Gew.-%) über einen Zeitraum von 10 min behandelt. Darauf folgend wurde bei 40°C im Flottenverhältnis von 1:10 unter Zusatz von 3 g/l Essigsäure (30 Gew.-% in Wasser) über einen Zeitraum von 10 min gespült. Der letzte Spülschritt erfolgte bei der gleichen Temperatur auch im Flottenverhältnis 1:10 für 10 min. Zum Abschluss wurde bei 80°C getrocknet.

Man erhielt einen Textildruck mit scharfen Konturen. Es wurde kein Ausfließen des Druckes beobachtet.

Echtheiten:

| | |
|---|---|
| Reibechtheit trocken: | 4-5 |
| Reibechtheit nass: | 4 |
| Waschechtheit (60°C) | 4 |

Druckpaste DP.7 und der Vergleich V-DP.8 wurde jeweils mittels einer Drahtrakel (10µm Auftragsstärke) auf Papier gerakelt und bei 120°C 1 min getrocknet. Anschlie-βend wurde mittels einer Transferpresse bei 210°C der Farbstoff auf Polyester transferiert / sublimiert, wobei er gleichzeitig fixierte.

Die resultierende Farbtiefe war bei Verwendung von DP.7 um 8 % höher als bei der zum Vergleich verwendeten Druckpaste V-DP.8.

Das Echtheitsniveau und die Kantenschärfe der Drucke mit DP.7 waren jeweils ausgezeichnet.

## Patentansprüche

1. Wässrige Dispersion, enthaltend
(A) ein Copolymer, das einpolymerisiert enthält
(a) wenigstens eine ethylenisch ungesättigte Carbonsäure oder ihr Anhydrid,
(b) wenigstens ein nichtionisches ethylenisch ungesättigtes Tensidmonomer der allgemeinen Formel I oder II
R¹-O-(CH₂-CHR²-O)ₙ-CO-C(R³)=CH₂ I
R¹-O-(CH₂-CHR²-O)ₙ-O-(CH₂)ₘCH=CH₂ II
worin R¹ für im Wesentlichen unverzweigtes C₆-C₃₀-Alkyl steht,
R² jeweils gleich oder verschieden ist und für Wasserstoff oder Methyl steht, R³ für Wasserstoff oder Methyl steht und
n für eine ganze Zahl im Bereich von 2 bis 100 steht,
m gewählt wird aus null oder eins,
(c) wenigstens ein C₁-C₂-Alkylmethacrylat,
(d) wenigstens ein C₂-C₄-Alkylacrylat,
und
(B) ein Farbmittel.

2. Wässrige Dispersion nach Anspruch 1, worin Copolymer (A) außerdem (e) mindestens ein mehrfach ethylenisch ungesättigtes Comonomer einpolymerisiert enthält.

3. Wässrige Dispersion nach Anspruch 1 oder 2, worin die ethylenisch ungesättigte Carbonsäure (a) ausgewählt ist aus Acrylsäure, Methacrylsäure, Itaconsäure und Maleinsäure bzw. deren Anhydriden.

4. Wässrige Dispersion nach einem der Ansprüche 1 bis 3, worin Copolymer (A) 5 bis 85 Gew.-% n-Butylacrylat als Comonomer (d) einpolymerisiert enthält.

5. Wässrige Dispersion nach einem der Ansprüche 1 bis 4, worin Copolymer (A) ein einstufiges Copolymer ist.

6. Wässrige Dispersion nach einem der Ansprüche 1 bis 5, **dadurch gekennzeichnet, dass** Farbmittel (B) gewählt wird aus Säurefarbstoffen, Metallkomplexfarbstoffen, Küpenfarbstoffen, Pigmenten, Dispersionsfarbstoffen und Reaktivfarbstoffen.

7. Wässrige Dispersion nach einem der Ansprüche 1 bis 6, enthaltend mindestens (C) einen anionischen und/oder einen nichtionischen Emulgator.

8. Wässrige Dispersion nach Anspruch 7, worin der Emulgator die allgemeine Formel aufweist
R¹-O-(CH₂-CHR²-O)ₙ-X
worin die Variablen wie folgt definiert sind:
R¹ steht für im Wesentlichen unverzweigtes C₆-C₃₀-Alkyl,
R² ist jeweils gleich oder verschieden und steht für Wasserstoff oder Methyl,
X steht für Wasserstoff oder SO₃M,
M für Wasserstoff oder ein Alkalimetall steht und
n für eine ganze Zahl im Bereich von 2 bis 100.

9. Verfahren zur Herstellung einer wässrigen Dispersion eines Copolymers (A) durch radikalische Copolymerisation von
(a) wenigstens einer ethylenisch ungesättigten Carbonsäure,
(b) wenigstens einem nichtionischen ethylenisch ungesättigten Tensidmonomer der allgemeinen Formel I
R¹-O-(CH₂-CHR²-O)ₙ-CO-C(R³)=CH₂ I
R¹-O-(CH₂-CHR²-O)ₙ-O-(CH₂)ₘCH=CH₂ II
worin R¹ für im Wesentlichen unverzweigtes C₆-C₃₀-Alkyl steht,
R² jeweils gleich oder verschieden ist und für Wasserstoff oder Methyl steht, R³ für Wasserstoff oder Methyl steht und
n für eine ganze Zahl von 2 bis 100 steht,
m gewählt wird aus null oder eins,
(c) wenigstens einem C₁-C₂-Alkylmethacrylat,
(d) wenigstens einem C₂-C₄-Alkylacrylat,
(e) gegebenenfalls mindestens einem mehrfach ethylenisch ungesättigten Monomer
(f) gegebenenfalls einem polaren Comonomer
und Vermischen mit mindestens einem Farbmittel (B).

10. Verfahren nach Anspruch 9, **dadurch gekennzeichnet, dass** man zur Herstellung von Copolymer (A) einen thermisch aktivierbaren Polymerisationsinitiator vorlegt und ein Gemisch von Monomeren (a), (b), (c), (d) und gegebenenfalls (e) zulaufen lässt und polymerisiert.

11. Verfahren nach einem der Ansprüche 9 oder 10, **dadurch gekennzeichnet, dass** man mindestens einen anionischen und/oder einen nichtionischen Emulgator (C) zusetzt, und zwar vor, während oder nach der Copolymerisation.

12. Verwendung von wässrigen Dispersionen nach einem der Ansprüche 1 bis 8 zum Kolorieren von textilen Substraten.

13. Verfahren zum Kolorieren von textilen Substraten unter Verwendung von wässrigen Dispersionen nach einem der Ansprüche 1 bis 8.

14. Verfahren nach Anspruch 13, **dadurch gekennzeichnet, dass** es sich um ein Druckverfahren handelt.

15. Textile Substrate, koloriert nach einem Verfahren nach einem der Ansprüche 13 oder 14.

16. Copolymer, das einpolymerisiert enthält
(a) wenigstens eine ethylenisch ungesättigte Carbonsäure oder ihr Anhydrid,
(b) wenigstens ein nichtionisches ethylenisch ungesättigtes Tensidmonomer der allgemeinen Formel I oder II
R¹-O-(CH₂-CHR²-O)ₙ-CO-C(R³)=CH₂ I
R¹-O-(CH₂-CHR²-O)ₙ-O-(CH₂)ₘCH=CH₂ II
worin R¹ für im Wesentlichen unverzweigtes C₆-C₃₀-Alkyl steht,
R² jeweils gleich oder verschieden ist und für Wasserstoff oder Methyl steht, R³ für Wasserstoff oder Methyl steht und
n für eine ganze Zahl im Bereich von 2 bis 100 steht,
m gewählt wird aus null oder eins,
(c) wenigstens ein C₁-C₂-Alkylmethacrylat,
(d) wenigstens ein C₂-C₄-Alkylacrylat,
(f) mindestens ein polares Comonomer.

17. Copolymer nach Anspruch 16, **dadurch gekennzeichnet, dass** polares Comonomer (f) gewählt wird aus Vinylpropionat, Vinylacetat, (Meth)acrylamid und (Meth)acrylnitril.

18. Copolymer nach Anspruch 16 oder 17, **dadurch gekennzeichnet, dass** es einpolymerisiert enthält:
10 bis 75 Gew.-% ethylenisch ungesättigte Carbonsäure (a),
0,1 bis 50 Gew.-% nichtionisches ethylenisch ungesättigtes Tensidmonomer (b),
0,5 bis 50 Gew.-% C₁-C₂-Alkylmethacrylat (c),
5 bis 85 Gew.-% C₂-C₄-Alkylacrylat (d) und
0,1 bis 30 Gew.-% polares Comonomer (f).

## Claims

1. An aqueous dispersion comprising
(A) a copolymer comprising in interpolymerized form
(a) at least one ethylenically unsaturated carboxylic acid or its anhydride,
(b) at least one nonionic ethylenically unsaturated surfactant monomer of the general formula I or II
R¹-O-(CH₂-CHR²-O)ₙ-CO-C(R³)=CH₂ I
R¹-O-(CH₂-CHR²-O)ₙ-O-(CH₂)ₘCH=CH₂ II
where R¹ represents essentially unbranched C₆-C₃₀-alkyl,
R² in each occurrence is the same or different and represents hydrogen or methyl,
R³ represents hydrogen or methyl,
n represents an integer in the range from 2 to 100,
m is selected from zero or one,
(c) at least one C₁-C₂-alkyl methacrylate,
(d) at least one C₂-C₄-alkyl acrylate,
and
(B) a colorant.

2. The aqueous dispersion according to claim 1 wherein copolymer (A) further comprises in interpolymerized form (e) at least one polyethylenically unsaturated comonomer.

3. The aqueous dispersion according to claim 1 or 2 wherein the ethylenically unsaturated carboxylic acid (a) is selected from acrylic acid, methacrylic acid, itaconic acid and maleic acid and also anhydrides thereof.

4. The aqueous dispersion according to any one of claims 1 to 3 wherein copolymer (A) comprises 5% to 85% by weight of n-butyl acrylate as comonomer (d) in interpolymerized form.

5. The aqueous dispersion according to any one of claims 1 to 4 wherein copolymer (A) is a single-stage copolymer.

6. The aqueous dispersion according to any one of claims 1 to 5 wherein colorant (B) is selected from acid dyes, metal complex dyes, vat dyes, pigments, disperse dyes and reactive dyes.

7. The aqueous dispersion according to any one of claims 1 to 6 comprising at least
(C) an anionic and/or a nonionic emulsifier.

8. The aqueous dispersion according to claim 7 wherein the emulsifier has the general formula
R¹-O-(CH₂-CHR²-O)ₙ-X
where
R¹ represents essentially unbranched C₆-C₃₀-alkyl,
R² in each occurrence is the same or different and represents hydrogen or methyl,
X represents hydrogen or SO₃M,
M represents hydrogen or an alkali metal, and
n represents an integer in the range from 2 to 100.

9. The process for producing an aqueous dispersion of a copolymer (A) by free-radical copolymerization of
(a) at least one ethylenically unsaturated carboxylic acid,
(b) at least one nonionic ethylenically unsaturated surfactant monomer of the general formula I
R¹-O-(CH₂-CHR²-O)ₙ-CO-C(R³)=CH₂ I
R¹-O-(CH₂-CHR²-O)ₙ-O-(CH₂)ₘCH=CH₂ II
where R¹ represents essentially unbranched C₆-C₃₀-alkyl,
R² in each occurrence is the same or different and represents hydrogen or methyl,
R³ represents hydrogen or methyl,
n represents an integer in the range from 2 to 100,
m is selected from zero or one,
(c) at least one C₁-C₂-alkyl methacrylate,
(d) at least one C₂-C₄-alkyl acrylate,
(e) optionally at least one polyethylenically unsaturated monomer,
(f) optionally a polar comonomer,
and mixing with at least one colorant (B).

10. The process according to claim 9 wherein copolymer (A) is prepared by a thermally activatable polymerization initiator being initially charged and a mixture of monomers (a), (b), (c), (d) and optionally (e) being added and polymerized.

11. The process according to either of claims 9 and 10 wherein at least one anionic and/or nonionic emulsifier (C) is added before, during or after the copolymerization.

12. The use of aqueous dispersions according to any one of claims 1 to 8 for coloration of textile substrates.

13. The process for coloration of textile substrates by using aqueous dispersions according to any one of claims 1 to 8.

14. The process according to claim 13 comprising a printing process.

15. A textile substrate colored by a process according to either of claims 13 and 14.

16. A copolymer comprising in interpolymerized form
(a) at least one ethylenically unsaturated carboxylic acid or its anhydride,
(b) at least one nonionic ethylenically unsaturated surfactant monomer of the general formula I or II
R¹-O-(CH₂-CHR²-O)ₙ-CO-C(R³)=CH₂ I
R¹-O-(CH₂-CHR²-O)ₙ-O-(CH₂)ₘCH=CH₂ II
where R¹ represents essentially unbranched C₆-C₃₀-alkyl,
R² in each occurrence is the same or different and represents hydrogen or methyl,
R³ represents hydrogen or methyl,
n represents an integer in the range from 2 to 100,
m is selected from zero or one,
(c) at least one C₁-C₂-alkyl methacrylate,
(d) at least one C₂-C₄-alkyl acrylate,
(f) at least one polar comonomer.

17. The copolymer according to claim 16 wherein polar comonomer (f) is selected from vinyl propionate, vinyl acetate, (meth)acrylamide and (meth)acrylonitrile.

18. The copolymer according to claim 16 or 17 comprising in interpolymerized form:
10% to 75% by weight of ethylenically unsaturated carboxylic acid (a),
0.1% to 50% by weight of nonionic ethylenically unsaturated surfactant monomer (b),
0.5% to 50% by weight of C₁-C₂-alkyl methacrylate (c),
5% to 85% by weight of C₂-C₄-alkyl acrylate (d), and
0.1 % to 30% by weight of polar comonomer (f).

## Revendications

1. Dispersion aqueuse, contenant
(A) un copolymère, qui contient sous forme copolymérisée
(a) au moins un acide carboxylique éthyléniquement insaturé ou son anhydride,
(b) au moins un monomère tensioactif éthyléniquement insaturé non ionique de formule générale I ou II
R¹-O-(CH₂-CHR²-O)ₙ-CO-C(R³)=CH₂ I
R¹-O-(CH₂-CHR²-O)ₙ-O-(CH₂)ₘCH=CH₂ II
dans lesquelles R¹ représente un alkyle en C₆-C₃₀ essentiellement non ramifié,
les R² sont à chaque fois identiques ou différents et représentent hydrogène ou méthyle,
R³ représente hydrogène ou méthyle, et
n représente un nombre entier dans la plage allant de 2 à 100,
m est choisi entre zéro ou un,
(c) au moins un méthacrylate d'alkyle en C₁-C₂,
(d) au moins un acrylate d'alkyle en C₂-C₄,
et
(B) un colorant.

2. Dispersion aqueuse selon la revendication 1, dans laquelle le copolymère (A) contient également sous forme copolymérisée (e) au moins un comonomère éthyléniquement polyinsaturé.

3. Dispersion aqueuse selon la revendication 1 ou 2, dans laquelle l'acide carboxylique éthyléniquement insaturé (a) est choisi parmi l'acide acrylique, l'acide méthacrylique, l'acide itaconique et l'acide maléique ou leurs anhydrides.

4. Dispersion aqueuse selon l'une quelconque des revendications 1 à 3, dans laquelle le copolymère (A) contient 5 à 85 % en poids d'acrylate de n-butyle sous forme copolymérisée en tant que comonomère (d).

5. Dispersion aqueuse selon l'une quelconque des revendications 1 à 4, dans laquelle le copolymère (A) est un copolymère à une étape.

6. Dispersion aqueuse selon l'une quelconque des revendications 1 à 5, **caractérisée en ce que** le colorant (B) est choisi parmi les colorants acides, les colorants complexes métalliques, les colorants de cuve, les pigments, les colorants en dispersion et les colorants réactifs.

7. Dispersion aqueuse selon l'une quelconque des revendications 1 à 6, contenant au moins (C) un émulsifiant anionique et/ou non ionique.

8. Dispersion aqueuse selon la revendication 7, dans laquelle l'émulsifiant présente la formule générale
R¹-O-(CH₂-CHR²-O)ₙ-X
dans laquelle les variables sont définies de la manière suivante :
R¹ représente un alkyle en C₆-C₃₀ essentiellement non ramifié,
les R² sont à chaque fois identiques ou différents et
représentent hydrogène ou méthyle,
X représente hydrogène ou SO₃M,
M représente hydrogène ou un métal alcalin, et
n représente un nombre entier dans la plage allant de 2 à 100.

9. Procédé de fabrication d'une dispersion aqueuse d'un copolymère (A) par copolymérisation radicalaire de
(a) au moins un acide carboxylique éthyléniquement insaturé,
(b) au moins un monomère tensioactif éthyléniquement insaturé non ionique de formule générale I
R¹-O-(CH₂-CHR²-O)ₙ-CO-C(R³)=CH₂ I
R¹-O-(CH₂-CHR²-O)ₙ-O-(CH₂)ₘCH=CH₂ II
dans lesquelles R¹ représente un alkyle en C₆-C₃₀ essentiellement non ramifié,
les R² sont à chaque fois identiques ou différents et représentent hydrogène ou méthyle,
R³ représente hydrogène ou méthyle, et
n représente un nombre entier de 2 à 100,
m est choisi entre zéro ou un,
(c) au moins un méthacrylate d'alkyle en C₁-C₂,
(d) au moins un acrylate d'alkyle en C₂-C₄,
(e) éventuellement au moins un monomère éthyléniquement polyinsaturé,
(f) éventuellement un comonomère polaire,
et mélange avec au moins un colorant (B).

10. Procédé selon la revendication 9, **caractérisé en ce que** pour la fabrication du copolymère (A), un initiateur de polymérisation activable thermiquement est charge initialement et un mélange de monomères (a), (b), (c), (d) et éventuellement (e) est introduit et polymérisé.

11. Procédé selon l'une quelconque des revendications 9 ou 10, **caractérisé en ce qu'**au moins un émulsifiant anionique et/ou non anionique (C) est ajouté, et ce avant, pendant ou après la copolymérisation.

12. Utilisation de dispersions aqueuses selon l'une quelconque des revendications 1 à 8 pour la coloration de substrats textiles.

13. Procédé de coloration de substrats textiles utilisant des dispersions aqueuses selon l'une quelconque des revendications 1 à 8.

14. Procédé selon la revendication 13, **caractérisé en ce qu** il s'agit d'un procédé d'impression.

15. Substrats textiles, colorés par un procédé selon l'une quelconque des revendications 13 ou 14.

16. Copolymère, qui contient sous forme copolymérisée
(a) au moins un acide carboxylique éthyléniquement insaturé ou son anhydride,
(b) au moins un monomère tensioactif éthyléniquement insaturé non ionique de formule générale I ou II
R¹-O-(CH₂-CHR²-O)ₙ-CO-C(R³)=CH₂ I
R¹-O-(CH₂-CHR²-O)ₙ-O-(CH₂)ₘCH=CH₂ II
dans lesquelles R¹ représente un alkyle en C₆-C₃₀ essentiellement non ramifié,
les R² sont à chaque fois identiques ou différents et représentent hydrogène ou méthyle,
R³ représente hydrogène ou méthyle, et
n représente un nombre entier dans la plage allant de 2 à 100,
m est choisi entre zéro ou un,
(c) au moins un méthacrylate d'alkyle en C₁-C₂,
(d) au moins un acrylate d'alkyle en C₂-C₄,
(f) au moins un comonomère polaire.

17. Copolymère selon la revendication 16, **caractérisé en ce que** le comonomère polaire (f) est choisi parmi le propionate de vinyle, l'acétate de vinyle, le (méth)acrylamide et le (méth)acrylonitrile.

18. Copolymère selon la revendication 16 ou 17, **caractérisé en ce qu'**il contient sous forme copolymérisée :
10 à 75 % en poids d'acide carboxylique éthyléniquement insaturé (a),
0,1 à 50 % en poids de monomère tensioactif éthyléniquement insaturé non tonique (b),
0,5 à 50 % en poids de méthacrylate d'alkyle en C₁-C₂ (C),
5 à 85 % en poids d'acrylate d'alkyle en C₂-C₄ (d), et 0,1 à 30 % en poids de comonomère polaire (f).
